# EUROPÄISCHE PATENTSCHRIFT

(11) **EP 3 167 308 B1**
(45) Veröffentlichungstag und Bekanntmachung des Hinweises auf die Patenterteilung: **12.05.2021**
(21) Anmeldenummer: 15736454.8
(22) Anmeldetag: 08.07.2015
(51) Int. Cl.: G01S 15/93, G01S 7/521, G10K 9/22

(54) **ULTRASCHALLSENSOREINRICHTUNG FÜR EIN KRAFTFAHRZEUG, KRAFTFAHRZEUG UND VERFAHREN ZUR MONTAGE EINER ULTRASCHALLSENSOREINRICHTUNG**
ULTRASONIC SENSOR DEVICE FOR A MOTOR VEHICLE, MOTOR VEHICLE, AND METHOD FOR MOUNTING AN ULTRASONIC SENSOR DEVICE
MOYEN FORMANT CAPTEUR À ULTRASONS DESTINÉ À UN VÉHICULE AUTOMOBILE, VÉHICULE AUTOMOBILE ET PROCÉDÉ DE MONTAGE D'UN MOYEN FORMANT CAPTEUR À ULTRASONS

(30) Priorität: 11.07.2014 DE 102014109797
(43) Veröffentlichungstag der Anmeldung: 17.05.2017
(73) Patentinhaber: Valeo Schalter und Sensoren GmbH, 74321 Bietigheim-Bissingen (DE)
(72) Erfinder: NEFT, Hubert, 74321 Bietigheim-Bissingen (DE); TRIEBL, Stefan, 74321 Bietigheim-Bissingen (DE)
(74) Vertreter: Enge, Sebastian
(86) Internationale Anmeldenummer: PCT/EP2015/065594
(87) Internationale Veröffentlichungsnummer: WO 2016/005444

(56) Entgegenhaltungen:
- EP-A1- 1 801 935
- EP-A2- 1 480 306
- WO-A2-2014/016298
- US-A1- 2011 242 941
- US-B1- 6 203 366
- US-B1- 6 282 969

## Beschreibung

Die Erfindung betrifft eine Ultraschallsensoreinrichtung für ein Kraftfahrzeug, mit einer Ultraschallsensoreinheit zum Senden und/oder Empfangen von Ultraschallwellen, welche ein Sensorgehäuse aufweist, und mit einem Gehäuse. Die Erfindung betrifft außerdem ein Kraftfahrzeug mit einer Ultraschallsensoreinrichtung, wie auch ein Verfahren zur Montage einer Ultraschallsensoreinrichtung.

Ultraschallsensoreinrichtungen sind aus dem Stand der Technik bekannt. So beschreibt die DE 10324296 A1 eine Befestigungshülse zur Befestigung eines Sensorgehäuses an einem Karosserieteil eines Fahrzeugs, wobei die Hülse einen Anschlag zur Anlage an eine Seite des Karosserieteils und mehrere sich in Längsrichtung erstreckende, in radialer Richtung elastisch nachgiebige Federarme zur Hinterrastung an der anderen Seite des Karosserieteils umfasst.

Weiterhin ist aus dem Stand der Technik ein Verfahren zur Montage einer Ultraschallsensorvorrichtung bekannt. Hierbei wird die Ultraschallsensorvorrichtung von außen in eine Öffnung eines Verkleidungsteils eines Kraftfahrzeugs eingesetzt und von innen, also der anderen Seite des Verkleidungsteils, wird die Ultraschallsensoreinrichtung mit einer Klammer, insbesondere einer Metallklammer, fixiert.

Eine Ultraschallsensoreinrichtung ist auch aus US2011242941 bekannt. Die offenbarte Einrichtung fasst ein mehrteiliges Design mit einem hohlzylinderförmigen Gehäuseteil, der einen flanschartigen Basisteil umfasst, und mit einem Halteelement, der in Umlaufrichtung um eine Längsachse des Gehäuseteils schwenkbar ist, um.

Es ist Aufgabe der Erfindung, eine Ultraschallsensoreinrichtung, ein Kraftfahrzeug sowie ein Verfahren bereitzustellen, bei welcher bzw. bei welchem die Ultraschallsensoreinrichtung einfach und dennoch positionsgenau montiert werden kann.

Diese Aufgabe wird erfindungsgemäß durch eine Ultraschallsensoreinrichtung, durch ein Kraftfahrzeug sowie durch ein Verfahren mit den Merkmalen gemäß den jeweiligen unabhängigen Patentansprüchen gelöst.

Eine erfindungsgemäße Ultraschallsensoreinrichtung für ein Kraftfahrzeug umfasst eine Ultraschallsensoreinheit zum Senden und/oder Empfangen von Ultraschallwellen, welche ein Sensorgehäuse aufweist, und ein Gehäuse für die gesamte Ultraschallsensoreinheit. Ein wesentlicher Gedanke der Erfindung ist darin zu sehen, dass das Gehäuse ein hohlzylinderförmiges Gehäuseteil aufweist, an welchem zumindest ein von einer Außenseite des Gehäuseteils abstehendes Halteelement, welches zur mechanischen Verbindung mit einem Verkleidungsteil des Kraftfahrzeugs ausgebildet ist, angeordnet ist, und das Halteelement in Umlaufrichtung um eine Längsachse des Gehäuseteils schwenkbar beziehungsweise klappbar ist.

Das Gehäuse kann auch als Halter oder Sensorhalter bezeichnet werden. Insbesondere kann die Ultraschallsensoreinheit ein Sensorgehäuse und eine Membran aufweisen.

Durch die erfindungsgemäße Ultraschallsensoreinrichtung wird es möglich, diese besonders einfach und dennoch individuell positionsgenau und dauerhaft positionsfixiert mit dem Verkleidungsteil des Kraftfahrzeugs zu verbinden. Die Verbindung, welche insbesondere eine formschlüssige Verbindung ist, wird durch das Halteelement gewährleistet. Das Halteelement schwenkt also von einem nicht eingeschwenkten Zustand vor der Montage zu einem eingeschwenkten Zustand während der Montage. Nach der Montage, wenn die Ultraschallsensoreinrichtung in einer Endposition angeordnet ist, liegen die Halteelemente in einem teilweise uneingeschwenkten Zustand vor. Ein Vorteil der Halteelemente ist auch eine besonders gute Kraftaufnahme in Richtung der Längsachse. Dadurch, dass die Halteelemente in Umlaufrichtung um die Längsachse schwenkbar sind, ist eine Schwenkachse des Halteelements vorzugsweise ebenfalls so ausgebildet, dass diese parallel zu der Längsachse verläuft.

Ein weiterer Vorteil des Gehäuses ist dessen einfache Fertigbarkeit. So sind die Halteelemente vorzugsweise derart ausgestaltet, dass das Gehäuse einteilig, beispielsweise in einem Spritzgussverfahren, gefertigt werden kann.

Insbesondere ist vorgesehen, dass das Halteelement über seine in Richtung der Längsachse bemessene Höhe ein erstes Teilelement aufweist, welches sich zur Längsachse hin verjüngt. Das erste Teilelement ist das Element des Halteelements, welches bei der Montage den ersten Kontakt mit dem Verkleidungsteil hat. Dieser Kontakt führt dazu, dass das Halteelement mit zunehmender Einsetztiefe in das Verkleidungsteil in den eingeschwenkten Zustand gebracht wird. Aufgrund der Verjüngung kann dieser eingeschwenkte Zustand kontinuierlich erreicht werden. Das Halteelement kann also so in den eingeschwenkten Zustand gebracht werden, dass dies kontinuierlich und nicht sprunghaft abläuft. Vorteilhaft daran ist wiederum ein geringer Kraftaufwand, welcher für das Einsetzen der Ultraschallsensoreinrichtung in eine Öffnung des Verkleidungsteils benötigt wird. Weiterhin kann das Risiko reduziert werden, dass sich das Halteelement bei der Montage verhakt beziehungsweise verkantet.

Erfindungsgemäß weist das Gehäuse ein flanschartiges Basisteil auf, welches an einem ersten Rand des Gehäuseteils angeordnet ist. Das flanschartige Basisteil führt dazu, dass die Ultraschallsensoreinrichtung auch auf einer Außenseite des Verkleidungsteils formschlüssig fixiert werden kann. Die Ultraschallsensoreinrichtung kann nun auf der Außenseite des Verkleidungsteils mit dem Basisteil fixiert werden, welches eine Bewegung in Richtung der Längsachse von der Außenseite des Verkleidungsteils hin zu dessen Innenseite verhindert. Und eine Bewegung der Ultraschallsensoreinrichtung in entgegengesetzte Richtung, also in Richtung der Längsachse von einer Innenseite des Verkleidungsteils bis zu einer Außenseite des Verkleidungsteils, kann durch das Halteelement verhindert werden. Das Basisteil weist also einen größeren Durchmesser als die Öffnung des Verkleidungsteils auf. Somit passt das Basisteil nicht durch die Öffnung des Verkleidungsteils hindurch. Ein Hindurchrutschen des Basisteils durch die Öffnung des Verkleidungsteils wird also verhindert. Das Basisteil kann auch dementsprechend größer bezüglich des Durchmessers senkrecht zu der Längsachse als die Öffnung sein, um das Eindringen von Schmutz in die Öffnung zu verhindern. Es kann somit vorgesehen sein, dass der Durchmesser so groß ist, dass das Basisteil derart auf das Verkleidungsteil überlappt, so dass Schmutz oder Feuchtigkeit von der Öffnung ferngehalten werden. Durch die flanschartige Ausgestaltung wird somit quasi auch ein Ring gebildet. Durch das Basisteil wird das Gehäuse auch stabilisiert und verwindungssteifer.

Weiterhin ist vorgesehen, dass das erste Teilelement auf der dem Basisteil abgewandten Seite des Halteelements ausgebildet ist. Dies ist vorteilhaft, weil somit die Verjüngung des ersten Teilelements beim Einstecken des Teilelements in die Öffnung des Verkleidungsteils ein kraftreduziertes Einstecken ermöglicht. Die Ultraschallsensoreinrichtung kann also von der dem ersten Teilelement zugewandten Seite in die Öffnung des Verkleidungsteils eingesteckt werden.

Insbesondere ist vorgesehen, dass das erste Teilelement einen die Verjüngung bildenden Randbereich aufweist, welcher sich zu einer oberen freien Randkante des Randbereichs hin verjüngt. Die Verjüngung des Randbereichs beziehungsweise ein abgefaster Bereich des ersten Teilelements hat den Vorteil, dass die Montage besonders einfach und kraftreduziert abläuft. Die Verjüngung des Randbereichs führt dazu, dass der Übergang von dem uneingeschwenkten Zustand zu dem eingeschwenkten Zustand des Halteelements besonders kontinuierlich beziehungsweise gleichmäßig ablaufen kann. Weiterhin ist vorgesehen, dass das Halteelement über seine in Richtung der Längsachse bemessenen Höhe ein zweites Teilelement aufweist, welches einem flanschartigen Basisteil des Gehäuses zugewandt ist, und in Richtung der Längsachse betrachtet beabstandet zu dem Basisteil angeordnet ist. Das zweite Teilelement kann somit in der montierten Endposition der Ultraschallsensoreinrichtung an dem Verkleidungsteil anliegen und auch positionssicher gehalten werden. Der Vorteil des zweiten Teilelements ist also auch die Fixierung, zumindest einseitig, des Verkleidungsteils. Insbesondere ist das Verkleidungsteil dann zwischen dem zweiten Teil des Halteelements und dem Basisteil fixiert.

Erfindungsgemäß ist vorgesehen, dass ein in Richtung der Längsachse bemessener Abstand zwischen dem Basisteil und einer unteren freien Randkante des zweiten Teilelements zumindest an der Stelle der unteren freien Randkante einer Dicke des Verkleidungsteils entspricht. Es kann somit vorgesehen sein, dass das Verkleidungsteils passgenau zwischen dem Basisteil und der unteren freien Randkante des zweiten Teilelements fixiert wird. Das Basisteil und die untere freie Randkante des zweiten Teilelements liegen somit unmittelbar auf den jeweiligen Seiten des Verkleidungsteils an dem Verkleidungsteil an. Die Ultraschallsensoreinrichtung ist dadurch mit dem Verkleidungsteil passgenau verbindbar. Die Ultraschallsensoreinrichtung ist somit in die eine Richtung der Längsachse durch das Basisteil formschlüssig fixiert und in die andere Richtung der Längsachse durch die untere freie Randkante des zweiten Teilelements formschlüssig fixiert. Weiterhin kann ergänzend zumindest eine kraftschlüssige Verbindung in die Richtungen senkrecht zu der Längsachse gewährleistet werden.

In einer weiteren Ausgestaltung ist vorgesehen, dass das zweite Teilelement einen einem ersten Teilelement des Halteelements abgewandten und dem Basisteil zugewandten Randbereich aufweist, der zu einer dem ersten Teilelement abgewandten und einem Basisteil des Gehäuses zugewandten unteren freien Randkante des Randbereichs hin verjüngt ausgebildet ist. Dies ist besonders vorteilhaft, weil das Halteelement dadurch leichter zurückgestellt werden kann. Aufgrund der Verjüngung gleitet die untere freie Randkante des zweiten Teilelements besser auf dem Verkleidungsteil.

Weiterhin ist bevorzugt vorgesehen, dass die untere freie Randkante des zweiten Teilelements zur Längsachse in einem Winkel ungleich 90°verläuft, insbesondere in einem Winkel größer 90°, wobei der Winkel den Berei ch zwischen der Längsachse und einer gedachten Verlängerung der unteren freien Randkante zur Überschneidung mit der Längsachse überstreicht. Dies hat den Vorteil, dass das Halteelement nach dem erfolgten Einsetzen in die Öffnung des Verkleidungsteils abhängig von der Dicke des Verkleidungsteils teilweise in den uneingeschwenkten Zustand zurückgestellt werden kann. Der Winkel dient also dazu, um Fertigungstoleranzen bei der Dicke des Verkleidungsteils abzupuffern beziehungsweise zu tolerieren. Ein überdurchschnittlich dickes Verkleidungsteil wird also dazu führen, dass sich das Halteelement nur in sehr geringem Ausmaß von dem eingeschwenkten Zustand in den uneingeschwenkten Zustand zurückstellt. Während ein dünnes Verkleidungsteil mit einer Dicke, welche unterdurchschnittlich ausgeprägt ist, dazu führt, dass das Halteelement von dem eingeschwenkten Zustand sehr weit in den uneingeschwenkten Zustand zurückgestellt wird.

Weiterhin ist vorgesehen, dass die Verjüngung des Randbereichs des zweiten Teilelements und die Verjüngung des Randbereichs des ersten Teilelement asymmetrisch bezüglich der Dicke des Halteelements, insbesondere gleichorientiert zu einer Oberfläche des Halteelements, ausgebildet sind. Das bedeutet, dass sich eine freie Randkante des Randbereichs nicht in einer Mittelebene des plattenförmigen zweiten Teilelements erstreckt sondern insbesondere parallel dazu. Vorteilhaft hieran ist, dass somit die Verjüngung des ersten Randbereichs und die Verjüngung des zweiten Randbereichs auf der Seite des Halteelements angeordnet sind, welche in Umlaufrichtung bezüglich der Längsachse liegen und auf der Seite, welche bei Vorliegen des Halteelements in dem eingeschwenkten Zustand von der Längsachse weg zeigt beziehungsweise weg gerichtet ist. Die Verjüngung des Randbereichs des ersten Teilelements hat den Vorteil, das Halteelement besonders gleichmäßig in den eingeschwenkten Zustand zu versetzen, während die Verjüngung des Randbereichs des zweiten Teilelement den Vorteil aufweist, dass das Halteelement besonders gleichmäßig von dem eingeschwenkten Zustand in den teilweise uneingeschwenkten Zustand bewegt werden kann.

Bevorzugt sind vier Halteelemente, insbesondere symmetrisch, in Umlaufrichtung der Längsachse an dem Gehäuseteil angeordnet. Vorteilhaft an den vier Halteelementen ist eine sehr gleichmäßige Haltewirkung und ein Verkanten beim Einstecken in die Öffnung des Verkleidungsteils ist verhindert. Weiterhin ermöglichen die vier Halteelemente, dass die Kraft, welche in Richtung der Längsachse und dem unteren Randbereich des zweiten Teilelements wirkt, verteilt aufgenommen werden kann und nicht nur auf ein Halteelement einwirkt. Weiterhin kann mit den vier Halteelementen auch eine Sicherheit erreicht werden. So ist beispielsweise bei einem Abbrechen eines der Halteelemente noch so viel Halt durch die verbleibenden drei Halteelemente gegeben, dass die Ultraschallsensorvorrichtung in der Öffnung des Verkleidungsteils fixiert ist und ein Rausfallen aus der Öffnung des Verkleidungsteils verhindert werden kann.

Erfindungsgemäß ist vorgesehen, dass eine Verbindungsstellung zwischen dem Gehäuseteil und dem Halteelement so ausgebildet ist, dass das Halteelement zumindest teilweise selbstrückführend vom verschwenkten in den unverschwenkten Zustand ausgebildet ist. Das bedeutet, das Halteelement bewegt sich selbsttätig von dem verschwenkten Zustand in den unverschwenkten Zustand zurück. Dies geht auch dann, falls durch das Verkleidungsteil ein Widerstand an dem unteren Rand des zweiten Teilelements anliegt. Die Selbstrückführung kann beispielsweise durch das verwendete Material beziehungsweise den verwendeten Werkstoff gewährleistet werden. So ist vorzugsweise ein Kunststoff, welcher in einem Spritzgussverfahren verarbeitet werden kann, besonders geeignet. Die Verbindungsstelle kann auch derart ausgelegt sein, dass der Wechsel von dem verschwenkten Zustand in den unverschwenkten Zustand mehrfach ausgeführt werden kann. So kann die Ultraschallsensoreinrichtung beispielsweise zu Reparatur- und/oder Ersatzzwecken ein wiederholtes Mal aus- beziehungsweise eingebaut werden.

In einer weiteren Ausführungsform können das Gehäuse und das Sensorgehäuse einteilig ausgebildet sein. Das bedeutet, dass das Gehäuse und das Sensorgehäuse als einteilige Baugruppe ausgebildet sein können.

Die Erfindung umfasst auch ein Kraftfahrzeug mit einer erfindungsgemäßen Ultraschallsensoreinrichtung oder einer vorteilhaften Ausführung davon.

Die Erfindung umfasst auch ein Verfahren zur Montage einer erfindungsgemäßen Ultraschallsensorvorrichtung oder einer vorteilhaften Ausführung davon, welche in eine Öffnung eines Verkleidungsteils eines Kraftfahrzeugs montiert wird.

Vorzugsweise wird die Ultraschallsensorvorrichtung in die Öffnung des Verkleidungsteils ausschließlich von einer Außenseite des Verkleidungsteils eingesetzt. Vorteilhaft daran ist, dass für die Montage der Ultraschallsensorvorrichtung ausschließlich ein Zugang zu der Außenseite des Verkleidungsteils nötig ist. Weiterhin entfällt ein möglicher weiterer Schritt zur Montage an einer Innenseite des Verkleidungsteils.

Weiterhin ist vorzugsweise vorgesehen, dass beim Berühren eines die Öffnung begrenzenden Rands durch das erste Teilelement und dem weiteren Einschieben der Ultraschallsensorvorrichtung in die Öffnung in Richtung der Längsachse das Halteelement in Umlaufrichtung um die Längsachse verschwenkt wird, so dass das Halteelement in einem verschwenkten Zustand an dem Gehäuse anliegt. Das Halteelement kann so lange in dem verschwenkten beziehungsweise eingeschwenkten Zustand verweilen, bis das Haltelemente den Rand passiert hat. Anschließend schwenkt das Halteelement vorzugsweise aufgrund des Winkels der unteren freien Randkante gleichmäßig zurück, bis die Ultraschallsensorvorrichtung eine Endposition erreicht hat.

Insbesondere wird die Ultraschallsensorvorrichtung in die Öffnung des Verkleidungsteils mit einem Steckerelement der Ultraschallsensorvorrichtung voran eingesetzt. Die Ultraschallsensorvorrichtung wird gekippt bis ein Basisteil des Gehäuses der Ultraschallsensorvorrichtung und das Verkleidungsteil parallel zueinander ausgerichtet sind. Es wird die Ultraschallsensorvorrichtung in die Öffnung über Halteelemente des Gehäuses hinweg eingeschoben und die Halteelemente werden eingeschwenkt, so dass diese in einem verschwenkten beziehungsweise eingeschwenkten Zustand an dem Gehäuse anliegen. Das Basisteil wird an dem Verkleidungsteil angeordnet beziehungsweise unmittelbar angelegt und die Halteelemente werden selbsttätig zumindest teilweise rückgeführt in einen unverschwenkten Zustand, so dass die Ultraschallsensorvorrichtung in der Endposition formschlüssig durch die Halteelemente fixiert ist. Vorteilhaft ist, dass die Ultraschallsensoreinrichtung von der Außenseite des Verkleidungsteils montiert beziehungsweise eingesetzt werden kann. Weiterhin ist vorteilhaft, dass dies ausschließlich von der Außenseite erfolgen kann und somit ein eventuell weiterer Eingriff von einer Innenseite des Verkleidungsteils eingespart werden kann. Besonders vorteilhaft ist darüber hinaus die Möglichkeit, die Ultraschallsensoreinrichtung besonders gleichmäßig und mit wenig Kraftaufwand zu montieren.

Die mit Bezug auf die erfindungsgemäße Ultraschallsensoreinrichtung vorgestellten bevorzugten Ausführungsformen und deren Vorteile gelten entsprechend für das erfindungsgemäße Kraftfahrzeug sowie für das erfindungsgemäße Verfahren, wobei für das Verfahren die gegenständlichen Elemente in Form und Anordnung so ausgebildet sind, dass diese durch das Wechselwirken untereinander die Montageschritte ermöglichen.

Weitere Merkmale der Erfindung ergeben sich aus den Ansprüchen, den Figuren und der Figurenbeschreibung in sofern beschränkt durch die Ansprüche.

Ausführungsbeispiele der Erfindung werden nachfolgend anhand schematischer Zeichnungen näher erläutert.

Dabei zeigen:
- Fig. 1: in schematischer Draufsicht ein Ausführungsbeispiel eines erfindungsgemäßen Kraftfahrzeugs mit einem Ausführungsbeispiel einer erfindungsgemäßen Ultraschallsensoreinrichtung;
- Fig. 2: in schematischer Perspektivansicht die erfindungsgemäße Ultraschallsensoreinrichtung;
- Fig. 3: eine schematische seitliche Detailansicht eines Ausführungsbeispiels eines Halteelements der Ultraschallsensorvorrichtung;
- Fig. 4: eine weitere schematische frontale Detailansicht des Halteelements gemäß Fig. 3;
- Fig. 5: in schematischer Seitenansicht ein Ausführungsbeispiel der erfindungsgemäßen Ultraschallsensoreinrichtung und das Verkleidungsteil des Kraftwagens in einem Montagezwischenzustand;
- Fig. 6: in schematischer Seitenansicht ein Ausführungsbeispiel der erfindungsgemäßen Ultraschallsensoreinrichtung in einer montierten Endposition an dem Verkleidungsteil;
- Fig. 7: in schematischer Draufsicht ein Ausführungsbeispiel der erfindungsgemäßen Ultraschallsensoreinrichtung in der Endposition und das Verkleidungsteil; und
- Fig. 8: eine schematische Perspektivansicht der Ultraschallsensoreinrichtung gemäß Fig. 7.

In den Figuren werden gleiche oder funktionsgleiche Elemente mit den gleichen Bezugszeichen versehen.

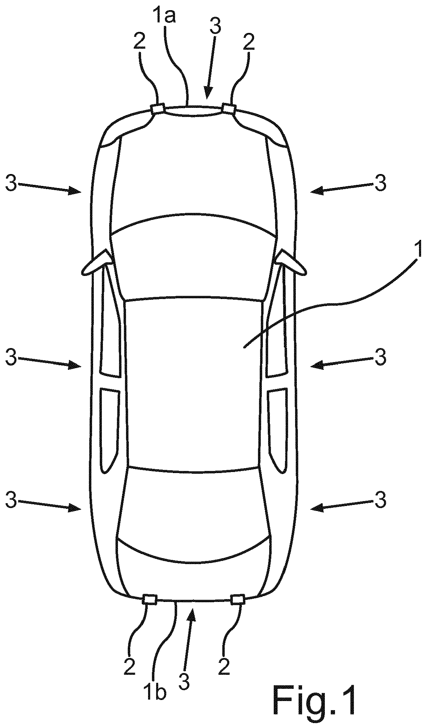

In Fig. 1 ist schematisch eine Draufsicht auf ein Kraftfahrzeug 1 mit einer Mehrzahl, beispielsweise vier, Ultraschallsensoreinrichtungen 2 gemäß einer Ausführungsform der Erfindung dargestellt. Die Ultraschallsensoreinrichtungen 2 sind im Ausführungsbeispiel an einer Front 1a des Kraftfahrzeugs 1 und einem Heck 1b des Kraftfahrzeugs 1 angebracht. Es kann beispielsweise vorgesehen auch sein, dass in einem Verkleidungsteil 3 der Front 1a des Kraftfahrzeugs 1 mehrere, beispielsweise vier oder sechs oder auch acht, Ultraschallsensoreinrichtungen 2 angebracht sind. Das Gleiche gilt für ein Verkleidungsteil 3 des Hecks 1b des Kraftfahrzeugs 1. Auch hier ist es möglich, dass vier oder sechs oder auch acht Ultraschallsensoreinrichtungen 2 angebracht sind. Die Verkleidungsteile können Stoßfänger sein.

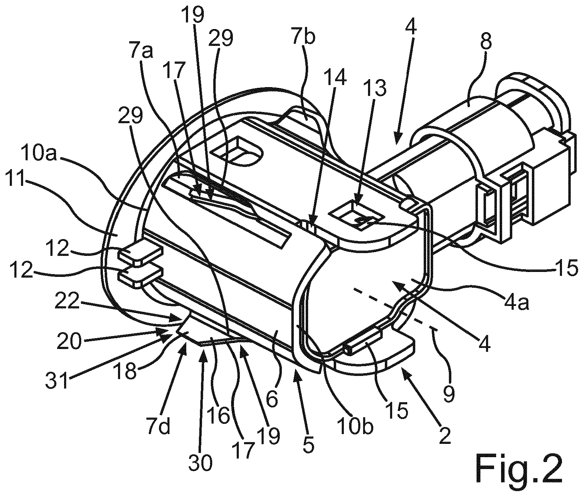

Fig. 2 zeigt eine Ultraschallsensoreinrichtung 2 mit einer Ultraschallsensoreinheit 4 zum Senden und/oder Empfangen von Ultraschallwellen, wobei die Ultraschallsensoreinheit 4 ein Sensorgehäuse 4a und eine Membran aufweist. Abhängig von den gesendeten und/oder empfangenen Ultraschallwellen kann aufgrund einer Laufzeitmessung von dem Aussendezeitpunkt zu dem Empfangszeitpunkt ein Abstand von der Ultraschallsensoreinheit 4 und einem die Ultraschallwelle reflektierenden Objektes in einem Umgebungsbereich des Kraftfahrzeugs 1 bestimmt werden.

Weiterhin umfasst die Ultraschallsensoreinrichtung 2 ein Gehäuse 5, welches ein hohlzylinderförmiges Gehäuseteil 6 aufweist. Das Gehäuse 5 kann beispielsweise auch als Halter oder Sensorhalter bezeichnet werden. Gemäß der Ausführungsform - wie in Fig. 2 gezeigt - sind das Sensorgehäuse 4a und das Gehäuse 6 zweiteilig ausgebildet.

An dem Gehäuseteil 6 stehen an einer Außenseite des Gehäuseteils 6 vier Halteelemente 7a, 7b, 7c, 7d ab. Aufgrund der perspektivischen Darstellung sind von den vier Halteelementen 7a bis 7d nur drei in Fig. 2 zu sehen. Weiterhin umfasst die Ultraschallsensoreinrichtung 2 ein seitlich an das Gehäuseteil 6 angeordnetes Steckerelement 8, welches insbesondere senkrecht zu einer Längsachse 9 des Gehäuseteils 6 ausgerichtet ist. An einem ersten Rand 10a des Gehäuseteils 6 ist ein flanschartiges Basisteil 11 angeordnet. Das Basisteil 11 ist vorzugsweise als Ring ausgebildet und weist senkrecht zur Längsachse 9 größere Ausmaße auf als das Gehäuseteil 6. Weiterhin ist das Basisteil 11 mit Rippen 12 an das Gehäuseteil 6 angebunden. Vorliegend sind zwei der Rippen 12 parallel angeordnet. Diese zwei parallelen Rippen 12 befinden sich ebenfalls - vorliegend nicht sichtbar - auf der entgegengesetzten Seite des Gehäuseteils 6.

Das Gehäuseteil 6 umfasst weiterhin zwei kleine Aussparungen 13, welche jeweils auf einer Seite des Gehäuseteils 6 liegen, die 90°in U mlaufrichtung der Längsachse 9 bezüglich der Rippen 12 rotiert ist. Die Seite des Gehäuseteils 6, welche die kleine Aussparung 13 beinhaltet, ist an einem zweiten Rand 10b des Gehäuseteils 6, welcher dem ersten Rand 10a des Gehäuseteils 6 gegenüberliegt, teilweise nur an zwei Seiten mit dem Rest des Gehäuseteils 6 verbunden. Aufgrund eins Schlitzes 14 des Gehäuseteils 6 ist die Seite des Gehäuseteils 6 bis zu einem gewissen Punkt flexibel. Dadurch können Rastnasen 15 der Ultraschallsensoreinheit 4 in den kleinen Aussparungen 13 verrasten werden.

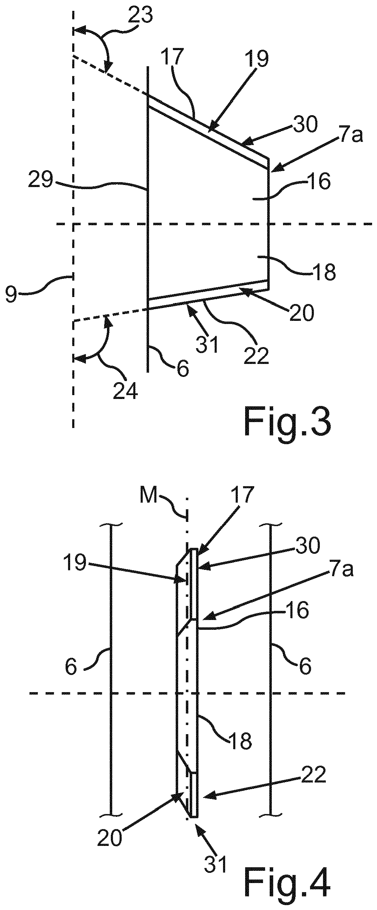

Da die Halteelemente 7a bis 7d insbesondere formmäßig gleich ausgebildet sind, wird nachfolgend nur auf das Halteelement 7a eingegangen. Das Halteelement 7a - wie in Fig. 3 und Fig. 4 gezeigt - weist ein erstes Teilelement 16 auf. Das erste Teilelement 16 weist einen Randbereich 30 auf, welcher sich zu einer oberen freien Randkante 17 des Randbereichs 30 hin verjüngt. Der Randbereich 30 kann auch als abgefast bezeichnet werden und bildet eine Verjüngung 19.

Weiterhin umfasst das Halteelement 7a ein zweites Teilelement 18, welches dem Basisteil 11 zugewandt ist und somit in Richtung der Längsachse 9 betrachtet dem Basisteil 11 näher liegt als das erste Teilelement 16. Das zweite Teilelement 18 weist an einem dem Basisteil 11 zugewandten Randbereich 31 eine untere Rankante 22 auf. Die untere freie Randkante 22 läuft von der Längsachse 9 weg in die Richtung des ersten Teilelements 16. Somit ist ein in Richtung der Längsachse 9 bemessener Abstand zwischen dem Basisteil 11 und der unteren freien Randkante 22 des zweiten Teilelements 18 mit zunehmendem radialen Abstand zur Längsachse 9 unterschiedlich groß. Die untere freie Randkante 22 des zweiten Teilelements 18 ist umso näher an dem Basisteil 11, je näher dieser Punkt auf der unteren freien Randkante 22 des Teilelements 18 an der Längsachse 9 liegt. Die untere freie Randkante 22 des zweiten Teilelements 18 entfernt sich also von der Längsachse 9 gesehen zunehmend von dem Basisteil 11. Der Abstand zwischen der unteren freien Randkante 22 des zweiten Teilelements 18 und dem Basisteil 11 erstreckt sich über einen Wertebereich, der der zu erwartenden Dicke des Verkleidungsteils 3 plus/minus einem Toleranzwert für Fertigungsungenauigkeiten entspricht.

Es ist somit vorgesehen, dass das Verkleidungsteil 3 mit sämtlichen Dicken, welche in einem vorbestimmten Toleranzbereich liegen, zwischen dem Basisteil 11 und der unteren freien Randkante 22 des zweiten Teilelements 18 passgenau angeordnet werden kann.

In Zusammenschau von Fig. 3 bis Fig. 4 ist das Halteelement 7a detailliert von der Seite und von vorne gezeigt. Besonders deutlich sind die Verjüngungen 19,20 und die obere freie Randkante 17 und die untere freie Randkante 22 zu erkennen, sowie die Asymmetrielage der freien Randkanten 17, 22 zu einer Mittelebene M des ebenen plattenartigen Halteelements 7a gezeigt.

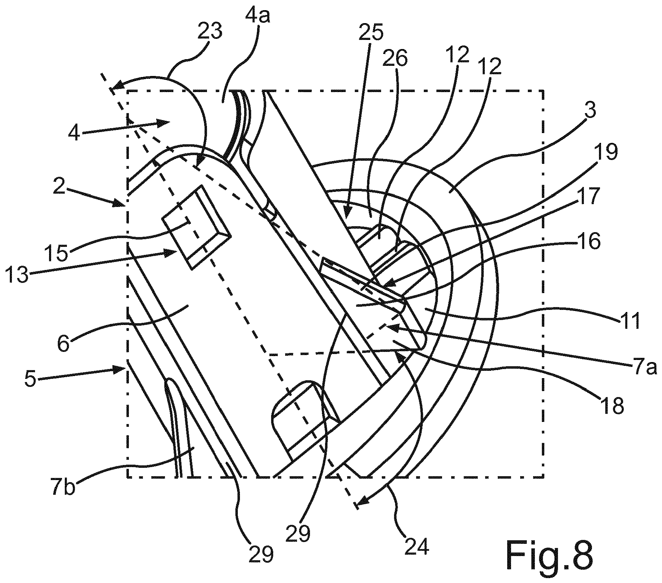

Weiterhin ist zusätzlich zu der unteren freien Randkante 22 an dem Randbereich 31 des zweiten Teilelements 18 eine Verjüngung 20 des Randbereichs 31 in Richtung dem Basisteil 11 vorgesehen. Die Verjüngung 19 des ersten Teilelements 16 und die Verjüngung 20 des zweiten Teilelements 18 sind asymmetrisch an dem Halteelement 7a angeordnet, insbesondere so, dass diese in einem eingeschwenkten Zustand des Halteelements 7a radial nach außen beziehungsweise von der Längsachse 9 weg zeigen. Die Verjüngungen 19,20 sind so angeordnet, dass diese sich über die Mittelebene M des Halteelements 7a hinaus erstrecken. Auch die obere freie Randkante 17 des ersten Teilelements 16 und die untere freie Randkante 22 des zweiten Teilelements 18 verlaufen asymmetrisch. Wobei die obere freie Randkante 17 des ersten Teilelements 16 mit der Längsachse 9 einen Winkel 23 (Fig. 3, Fig. 8) einschließt, welcher beispielsweise zwischen 120° und 170° liegen kann, also relativ fl ach ist. Während die Randkante 22 einen Winkel 24 (Fig. 3, Fig. 8) mit der Längsachse 9 einschließt, welcher sich zwischen 90° und 120°befindet, also relativ steil ist.

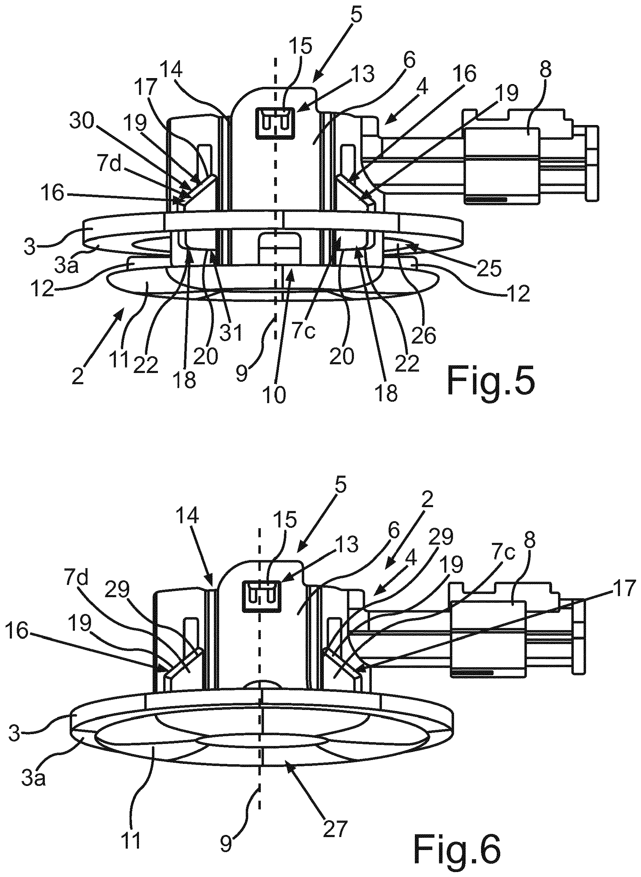

Fig. 5 zeigt ein Ausführungsbeispiel der Ultraschallsensoreinrichtung 2 in seitlicher Ansicht. Die Ultraschallsensoreinrichtung 2 wird gerade in eine Öffnung 25 des Verkleidungsteils 3 eingesteckt. Dabei befindet sich die Montage, wie dargestellt in Fig. 3, in einem Zwischenzustand, das heißt das Verkleidungsteil 3 hat die Halteelemente 7a bis 7d in dem eingeschwenkten Zustand bewegt. Bis zu diesem Zwischenzustand erfolgt die Montage derart, dass die Ultraschallsensoreinrichtung 2 mit dem Steckerelement 8 voran von einer Außenseite 3a des Verkleidungsteils 3 her kommend in die Öffnung 25 eingeführt, um dann gegebenenfalls gekippt zu werden, so dass das Basisteil 11 und das Verkleidungsteil 3 parallel angeordnet sind. Dann wird die Ultraschallsensoreinrichtung 2 in Richtung der Längsachse 9 weiter in die Öffnung 25 eingesteckt, so dass ein Rand 26 der Öffnung 25 mit dem ersten Teilelement 16 in Kontakt kommt. Wird die Ultraschallsensoreinrichtung 2 nun axial weiter in die Öffnung 25 eingedrückt, so bewirkt der Rand 26, dass das Halteelement 7a aufgrund des Winkels 23 und der Verjüngung 19 gleichmäßig in den eingeschwenkten Zustand und somit um die Längsachse 9 bewegt wird. Die beschriebene Situation ist nun wie in Fig. 5 dargestellt. Die Halteelemente 7a bis 7d bewirken also in diesem Zustand eine andauernde Kraft auf den Rand 26.

Fig. 6 zeigt nun die Situation, wenn ausgehend von Fig. 5 die Ultraschallsensoreinrichtung 2 axial weiter in die Öffnung 25 eingedrückt wird und die Ultraschallsensoreinrichtung 2 schließlich in einer Endposition angekommen ist. In der Endposition gemäß Fig. 6 haben sich die Halteelemente 7a bis 7d selbstständig in Richtung des unverschwenkten Zustands zurückgeschwenkt und zwar soweit bis ein Widerstand, insbesondere ein Reibungswiderstand, zwischen dem jeweiligen Halteelement 7a bis 7d, insbesondere der unteren freien Randkante 22, und dem Verkleidungsteil 3 einen bestimmten Wert des Widerstand erreicht hat. Das selbstständige Zurückschwenken beziehungsweise Selbstrückführen des Halteelements 7a kann beispielsweise mittels Materialen beziehungsweise eines Werkstoffes des Gehäuses 5 beziehungsweise des Halteelements 7a unterstützt werden. So kann beispielsweise ein Kunststoff verwendet werden. Dieser Kunststoff kann beispielsweise in einem Spritzgussverfahren in die Form des Gehäuses 5 beziehungsweise des Halteelements 7a gebracht werden.

Für die formschlüssige Verbindung des Verkleidungsteils 3 mit dem Basisteil 11 und den Halteelementen 7a bis 7d ist insbesondere die Schräge beziehungsweise der gebildete Winkel 24 des zweiten Teilelements 18 hilfreich. Diese Orientierung der unteren freien Randkante 22 ermöglicht eine individuelle Positionsanpassung der Ultraschallsensoreinrichtung 2 gegenüber verschiedenen Dicken des Verkleidungsteils 3. So schwenkt das Halteelement 7a nur wenig in Richtung des unverschwenkten Zustandes ein im Fall von einem besonders dicken Verkleidungsteil 3, während das Halteelement 7a im Fall von einem besonders dünnen Verkleidungsteil 3 sehr weit in Richtung des unverschwenkten Zustandes schwenkt. Weiterhin unterstützt die Verjüngung 20 die Selbstrückführung des Halteelements 7a, weil die Verjüngung 20 vorzugsweise derart an dem Halteelement 7a angebracht ist, dass ein Selbstzurückführen von dem verschwenkten Zustand in den unverschwenkten Zustand oder in den teilweise unverschwenkten Zustand erleichtert wird. So kann dadurch beispielsweise eine gewisse Rauheit oder Fertigungsungenauigkeit der Oberfläche des Verkleidungsteils 3 kompensiert werden, weil sich das Halteelement 7a mit der Verjüngung 20 nicht so leicht bei der Selbstrückführung verhakt.

Die untere freie Randkante 22 ist so vorzugsweise außermittig bezüglich der Mittelebene M angeordnet, dass bedeutet, in dem eingeschenkten Zustand ist die Randkante 22 näher an der Längsachse 9 als die Mittelebene M.

In dem Basisteil 11 ist um die Längsachse 9, also in der Mitte des Basisteils 11, eine weitere Öffnung 27 gebildet, durch welche die Ultraschallsensoreinheit 4 Ultraschallwellen senden und/oder empfangen kann.

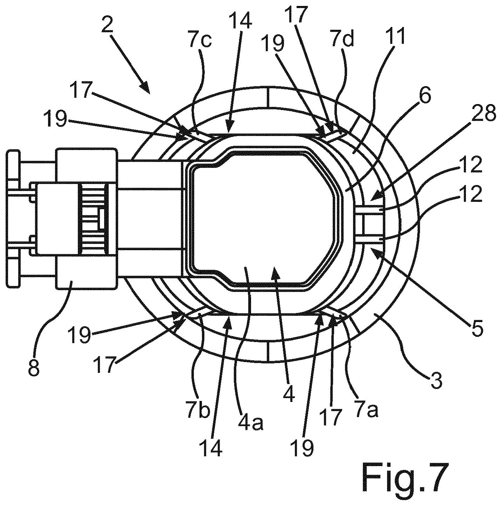

Fig. 7 zeigt die Ultraschallsensoreinrichtung 2 in einer Draufsicht, wobei die Ultraschallsensoreinrichtung 2 bereits mit dem Verkleidungsteil 3 verbunden ist und in der Endposition gemäß Fig. 6 vorliegt. Es ist zu sehen, dass die Rippen 12 an dem Rand 26 unmittelbar anliegen und dadurch eine Bewegung senkrecht zu der Längsachse 9 und in Richtung der gegenüberliegenden Rippen 12 des Verkleidungsteils 3 verhindert ist. Eine Bewegung um 90°gedreht bezüglich der gerade zuvor beschriebenen Bewegung aber auch senkrecht zu der Längsachse 9 wird verhindert, weil das Verkleidungsteil 3 mit seinem Rand 26 unmittelbar an dem Gehäuseteil 6 anliegt.

Die Rippen 12 ermöglichen im montierten Endzustand einen Freiraum 28, durch welchen die Halteelemente 7a bis 7d in dem eingeschwenkten Zustand in die Öffnung 25 hindurch beziehungsweise an dem Rand 26 vorbei gelangen können.

Weiterhin können die Rippen 12 so ausgestaltet sein, dass diese eine Kodierung aufweisen. So kann beispielsweise eine der parallelen Rippen 12 länger sein als die andere. Dies hat den Vorteil, dass ein falscher Einbau der Ultraschallsensoreinrichtung 2 verhindert werden kann.

Weiterhin ist in Fig. 7 und Fig. 8 zu erkennen, dass die Halteelemente 7a bis 7d abweichend von einer radialen Ausrichtung bezüglich der Längsachse 9 angeordnet sind.

Das Halteelement 7a kann deshalb seinen Zustand von dem verschwenkten Zustand zurück in den unverschwenkten Zustand selbst zurückführen, weil eine Verbindungsstelle 29 zwischen dem Gehäuseteil 6 und dem Halteelement 7a dafür ausgelegt ist. Die Verbindungsstelle 29 ermöglicht also die Flexibilität des Halteelements 7a, welche notwendig ist, um das Halteelement 7a soweit einzuschwenken, dass dies durch die Öffnung 25 des Verkleidungsteils 3 hindurch passt. Durch die Verbindungsstelle 29 ist die relative Bewegbarkeit des Halteelements 7a zum Gehäuseteil 6 erreicht, mit dem das Halteelement 7a einstückig ausgebildet ist.

## Patentansprüche

1. Ultraschallsensoreinrichtung (2) für ein Kraftfahrzeug (1), mit einer Ultraschallsensoreinheit (4) zum Senden und/oder Empfangen von Ultraschallwellen, welche ein Sensorgehäuse (4a) aufweist, und mit einem Gehäuse (5) zur Aufnahme der Ultraschallsensoreinheit (4),
wobei das Gehäuse (5) ein hohlzylinderförmiges Gehäuseteil (6) aufweist, an welchem zumindest ein von einer Außenseite des Gehäuseteils (6) abstehendes Halteelement (7a bis 7d), welches zur mechanischen Verbindung mit einem Verkleidungsteil (3) des Kraftfahrzeuges (1) ausgebildet ist, angeordnet ist, wobei das Gehäuse (5) ein flanschartiges Basisteil (11) aufweist, welches an einem ersten Rand (10) des Gehäuseteils (6) angeordnet ist, wobei das Halteelement (7a bis 7d) über seine in Richtung der Längsachse (9) bemessenen Höhe ein zweites Teilelement (18) aufweist, welches dem flanschartigen Basisteil (11) des Gehäuses (5) zugewandt ist, und in Richtung der Längsachse (9) betrachtet beabstandet zu dem Basisteil (11) angeordnet ist, wobei ein in Richtung der Längsachse (9) bemessener Abstand zwischen dem Basisteil (11) und einer unteren freien Randkante (22) des zweiten Teilelements (18) zumindest an der Stelle der unteren freien Randkante (22) einer Dicke des Verkleidungsteils (3) entspricht, wobei das Halteelement (7a bis 7d) in Umlaufrichtung um eine Längsachse (9) des Gehäuseteils (6) schwenkbar ist, und wobei eine Verbindungsstelle (29) zwischen dem Gehäuseteil (6) und dem Halteelement (7a bis 7d) so ausgebildet ist, dass das Halteelement (7a bis 7d) zumindest teilweise selbstrückführend von dem verschwenkten Zustand in den unverschwenkten Zustand ausgebildet ist.

2. Ultraschallsensoreinrichtung (2) nach Anspruch 1,
**dadurch gekennzeichnet, dass**
das Halteelement (7a bis 7d) über seine in Richtung der Längsachse (9) bemessenen Höhe ein erstes Teilelement (16) aufweist, welches sich zur Längsachse (9) hin verjüngt.

3. Ultraschallsensoreinrichtung (2) nach Anspruch 2,
**dadurch gekennzeichnet, dass**
das erste Teilelement (16) auf der dem Basisteil (11) abgewandten Seite des Halteelements (7a bis 7d) ausgebildet ist.

4. Ultraschallsensoreinrichtung (2) nach Anspruch 2 oder 3,
**dadurch gekennzeichnet, dass**
das erste Teilelement (16) einen die Verjüngung (19) bildenden Randbereich (30) aufweist, welcher sich zu einer oberen freien Randkante (17) hin verjüngt.

5. Ultraschallsensoreinrichtung (2) nach einem der vorhergehenden Ansprüche,
**dadurch gekennzeichnet, dass**
das zweite Teilelement (18) einen einem ersten Teilelement (16) des Halteelements (7a bis 7d) abgewandten Randbereich (31) aufweist, der zu einer dem ersten Teilelement (16) abgewandten unteren freien Randkante (22) des Randbereichs (31) hin verjüngt ausgebildet ist.

6. Ultraschallsensoreinrichtung (2) nach einem der vorhergehenden Ansprüche,
**dadurch gekennzeichnet, dass**
die untere freien Randkante (22) des zweiten Teilelements (18) zur Längsachse (9) in einem Winkel (24) ungleich 90° verläuft, insbesondere einen Winkel (24) größer 90° aufweist.

7. Ultraschallsensoreinrichtung (2) nach einem der vorhergehenden Ansprüche,
**dadurch gekennzeichnet, dass**
vier Halteelemente (7a bis 7d), insbesondere symmetrisch, in Umlaufrichtung der Längsachse (9) an dem Gehäuseteil (6) angeordnet sind.

8. Kraftfahrzeug (1) mit einer Ultraschallsensoreinrichtung (2) einem der vorhergehenden Ansprüche.

9. Verfahren zur Montage einer Ultraschallsensoreinrichtung (2) nach einem der
Ansprüche 1 bis 7, umfassend den folgende Schritt: Montieren der Ultraschallsensoreinrichtung (2) in eine Öffnung (25) eines Verkleidungsteils (2) eines Kraftfahrzeugs (1).

10. Verfahren nach Anspruch 9,
**dadurch gekennzeichnet, dass**
die Ultraschallsensoreinrichtung (2) von einer Außenseite des Verkleidungsteils (3) her kommend mit einem ersten Teilelement (16) des Halteelements (7a bis 7d) der Öffnung zugewandt (25) in die Öffnung (25) eingesetzt wird.

11. Verfahren nach Anspruch 10,
**dadurch gekennzeichnet, dass**
beim Berühren eines die Öffnung (25) begrenzenden Rands (26) durch das erste Teilelement (16) und dem weiteren Einschieben der Ultraschallsensorvorrichtung (2) in die Öffnung (25) in Richtung der Längsachse (9) das Halteelement (7a bis 7d) in Umlaufrichtung um die Längsachse (9) verschwenkt wird, so dass das Halteelement (7a bis 7d) in einem verschwenkten Zustand an dem Gehäuse (5) anliegt.

## Claims

1. Ultrasonic sensor device (2) for a motor vehicle (1), with an ultrasonic sensor unit (4) for transmitting and/or receiving ultrasonic waves that comprises a sensor housing (4a), and with a housing (5) for accommodating the ultrasonic sensor unit (4), wherein the housing (5) comprises a hollow cylindrical housing part (6), on which is disposed at least one holding element (7a to 7d) protruding from the outside of the housing part (6) that is designed for mechanical connection to a cladding part (3) of the motor vehicle (1), wherein the housing (5) comprises a flange-like base part (11) that is disposed on a first edge (10) of the housing part (6), wherein the holding element (7a to 7d) comprises a second sub element (18) over the height thereof measured in the direction of the longitudinal axis (9) that faces towards the flange-like base part (11) of the housing (5) and that is disposed at a distance from the base part (11) when viewed in the direction of the longitudinal axis (9), wherein a distance measured in the direction of the longitudinal axis (9) between the base part (11) and a lower free outer edge (22) of the second sub element (18) corresponds to a thickness of the cladding part (3) at least at the point of the lower free outer edge (22), wherein the holding element (7a to 7d) is pivotable in the circumferential direction about a longitudinal axis (9) of the housing part (6), and wherein a connecting point (29) between the housing part (6) and the holding element (7a to 7d) is designed so that the holding element (7a to 7d) is designed to be at least partly self-restoring from the pivoted state into the unpivoted state.

2. Ultrasonic sensor device (2) according to Claim 1,
**characterized in that**
the holding element (7a to 7d) comprises a first sub element (16) over the height thereof measured in the direction of the longitudinal axis (9) that tapers towards the longitudinal axis (9).

3. Ultrasonic sensor device (2) according to Claim 2,
**characterized in that**
the first sub element (16) is formed on the side of the holding element (7a to 7d) facing away from the base part (11).

4. Ultrasonic sensor device (2) according to Claim 2 or 3,
**characterized in that**
the first sub element (16) comprises an edge region (30) forming the taper (19) that tapers towards an upper free outer edge (17).

5. Ultrasonic sensor device (2) according to any one of the preceding claims,
**characterized in that**
the second sub element (18) comprises an edge region (31) facing away from a first sub element (16) of the holding element (7a to 7d) that is designed to taper towards a lower free outer edge (22) of the edge region (31) facing away from the first sub element (16).

6. Ultrasonic sensor device (2) according to any one of the preceding claims,
**characterized in that**
the lower free outer edge (22) of the second sub element (18) extends at an angle (24) to the longitudinal axis (9) that is not equal to 90º, in particular at an angle (24) that is greater than 90°.

7. Ultrasonic sensor device (2) according to any one of the preceding claims,
**characterized in that**
four holding elements (7a to 7d) are disposed on the housing part (6) in the circumferential direction of the longitudinal axis (9), in particular symmetrically.

8. Motor vehicle (1) with an ultrasonic sensor device (2) according to any one of the preceding claims,

9. Method for mounting an ultrasonic sensor device (2) according to any one of Claims 1 to 7, comprising the following step:
Mounting the ultrasonic sensor device (2) in an opening (25) of a cladding part (2) of a motor vehicle (1).

10. Method according to Claim 9,
**characterized in that**
the ultrasonic sensor device (2) is inserted into the opening (25) from the outside of the cladding part (3) starting with a first sub element (16) of the holding element (7a to 7d) facing the opening (25) .

11. Method according to Claim 10,
**characterized in that**
when the first sub element (16) contacts an edge (26) bounding the opening (25) and on further insertion of the ultrasonic sensor device (2) into the opening (25) in the direction of the longitudinal axis (9), the holding element (7a to 7d) is pivoted in the circumferential direction about the longitudinal axis (9) so that the holding element (7a to 7d) rests on the housing (5) in a pivoted state.

## Revendications

1. Dispositif formant capteur à ultrasons (2) pour un véhicule automobile (1), comprenant une unité de capteur à ultrasons (4) permettant d'émettre et/ou de recevoir des ondes ultrasonores et qui présente un boîtier de capteur (4a), et comprenant un boîtier (5) permettant de recevoir l'unité de capteur à ultrasons (4),
le boîtier (5) présentant une partie de boîtier cylindrique creuse (6) sur laquelle est disposé au moins un élément de maintien (7a à 7d) faisant saillie à partir d'une face extérieure de la partie de boîtier (6) et qui est réalisé pour un raccordement mécanique à une partie d'habillage (3) du véhicule automobile (1), le boîtier (5) présentant une partie de base (11) en forme de bride qui est disposée sur un premier bord (10) de la partie de boîtier (6), l'élément de maintien (7a à 7d) présentant sur sa hauteur, mesurée dans la direction de l'axe longitudinal (9), un deuxième élément partiel (18) qui est tourné vers la partie de base (11) en forme de bride du boîtier (5) et est disposé à distance de la partie de base (11), vu dans la direction de l'axe longitudinal (9), dans lequel une distance, mesurée dans la direction de l'axe longitudinal (9), entre la partie de base (11) et un bord marginal libre inférieur (22) du deuxième élément partiel (18) correspond à une épaisseur de la partie d'habillage (3), au moins à l'endroit du bord marginal libre inférieur (22), l'élément de maintien (7a à 7d) étant pivotant dans la direction périphérique autour d'un axe longitudinal (9) de la partie de boîtier (6), et dans lequel un point de jonction (29) entre la partie de boîtier (6) et l'élément de maintien (7a à 7d) est réalisé de telle sorte que l'élément de maintien (7a à 7d) est réalisé au moins en partie pour revenir automatiquement de l'état pivoté à l'état non pivoté.

2. Dispositif formant capteur à ultrasons (2) selon la revendication 1, **caractérisé en ce que** l'élément de maintien (7a à 7d) présente sur sa hauteur, mesurée dans la direction de l'axe longitudinal (9), un premier élément partiel (16) qui est conique en direction de l'axe longitudinal (9).

3. Dispositif formant capteur à ultrasons (2) selon la revendication 2, **caractérisé en ce que** le premier élément partiel (16) est réalisé sur la face, détournée de la partie de base (11), de l'élément de maintien (7a à 7d) .

4. Dispositif formant capteur à ultrasons (2) selon la revendication 2 ou 3, **caractérisé en ce que** le premier élément partiel (16) présente une zone marginale (30) formant la conicité (19) qui est conique en direction d'un bord marginal libre supérieur (17).

5. Dispositif formant capteur à ultrasons (2) selon l'une quelconque des revendications précédentes, **caractérisé en ce que** le deuxième élément partiel (18) présente une zone marginale (31) détournée d'un premier élément partiel (16) de l'élément de maintien (7a à 7d) et qui est réalisée de manière conique en direction d'un bord marginal libre inférieur (22), détourné du premier élément partiel (16), de la zone marginale (31) .

6. Dispositif formant capteur à ultrasons (2) selon l'une quelconque des revendications précédentes, **caractérisé en ce que** le bord marginal libre inférieur (22) du deuxième élément partiel (18) s'étend par rapport à l'axe longitudinal (9) selon un angle (24) différent de 90°, en particulier selon un angle (24) supérieur à 90°.

7. Dispositif formant capteur à ultrasons (2) selon l'une quelconque des revendications précédentes, **caractérisé en ce que** quatre éléments de maintien (7a à 7d) sont disposés sur la partie de boîtier (6), en particulier en symétrie, dans la direction périphérique de l'axe longitudinal (9).

8. Véhicule automobile (1), comprenant un dispositif formant capteur à ultrasons (2) selon l'une quelconque des revendications précédentes.

9. Procédé de montage d'un dispositif formant capteur à ultrasons (2) selon l'une quelconque des revendications 1 à 7, comprenant l'étape suivante consistant à :
monter le dispositif formant capteur à ultrasons (2) dans une ouverture (25) d'une partie d'habillage (2) d'un véhicule automobile (1).

10. Procédé selon la revendication 9, **caractérisé en ce que** le dispositif formant capteur à ultrasons (2) est inséré dans l'ouverture (25) en partant d'une face extérieure de la partie d'habillage (3), avec un premier élément partiel (16) de l'élément de maintien (7a à 7d), en étant tourné vers l'ouverture (25).

11. Procédé selon la revendication 10, **caractérisé en ce que** si le premier élément partiel (16) touche un bord (26) délimitant l'ouverture (25) et le dispositif formant capteur à ultrasons (2) est poussé plus loin dans l'ouverture (25) dans la direction de l'axe longitudinal (9), l'élément de maintien (7a à 7d) est amené à pivoter dans la direction périphérique autour de l'axe longitudinal (9) de telle sorte que l'élément de maintien (7a à 7d) est en appui contre le boîtier (5) dans un état pivoté.
